# EUROPEAN PATENT SPECIFICATION

(11) **EP 2 445 980 B1**
(45) Date of publication and mention of the grant of the patent: **26.07.2017**
(21) Application number: 10797527.8
(22) Date of filing: 17.06.2010
(51) Int. Cl.: C09J 4/00, C09J 5/00, C09J 183/07, B32B 7/10, C08K 5/54, C08F 214/18, C08F 214/22, B32B 25/20, C08J 5/12, C09J 151/08, C08K 9/06, C08L 27/16, C08L 27/12, C08L 27/18, C08L 27/20

(54) **METHOD OF BONDING A FLUOROPOLYMER USING A SILANE CONTAINING BONDING PROMOTER**
VERFAHREN ZUM BINDEN EINES FLUORPOLYMERS UNTER VERWENDUNG EINES SILANHALTIGEN BINDUNGSPROMOTER
PROCÉDÉ DE COLLAGE D'UN POLYMÈRE FLUORÉ UTILISANT UN PROMOTEUR DE COLLAGE CONTENANT UN SILANE

(30) Priority: 22.06.2009 GB 0910734
(43) Date of publication of application: 02.05.2012
(73) Proprietor: 3M Innovative Properties Company, St. Paul, MN 55133-3427 (US)
(72) Inventor: VERSCHUERE, Alain, B-1831 Diegem (BE)
(74) Representative: Kurz, Arnd
(86) International application number: PCT/US2010/038935
(87) International publication number: WO 2011/005443

(56) References cited:
- EP-A1- 1 454 740
- WO-A1-03/089239
- US-A- 4 984 870
- US-A1- 2003 125 463
- US-A1- 2004 071 987
- US-A1- 2004 175 526
- US-A1- 2006 148 971
- US-B1- 6 596 357

## Description

### 1. Field

The present disclosure relates to a method of bonding a fluoropolymer composition to another composition containing a different polymer, in particular a different fluoropolymer or a silicone-containing polymer, using a silane-containing bonding promoter. The present disclosure also relates to a fluoropolymer composition and a silicone polymer composition containing the bonding promoter and to the use of these compositions for making articles, in particular hoses, tubes, O-rings and seals. The present disclosure also relates to articles containing a fluoropolymer layer bonded to layer containing a different polymer, in particular a fluoropolymer or a silicone polymer, wherein the bonding has been carried out by a method using the silane-containing bonding promoter.

### 2. Background

The beneficial properties of fluoropolymers are well known in the art and include for example, high temperature resistance, high chemical resistance including for example high resistance to solvents, fuels and corrosive chemicals, and non-flammability. Because of these beneficial properties, fluoropolymers find wide application particularly where materials are exposed to high temperature and/or aggressive chemicals. Fluoroelastomers are fluoropolymers having elastic properties. They may be obtained upon curing or vulcanization of amorphous fluoropolymers. Fluoroelastomers are widely used in the preparation of elastic articles where chemical resistance and heat resistance is required. For example, fluoroelastomers are commonly used in fuel management systems which include, for example, fuel tanks, fuel filler lines and fuel supply lines because of their excellent resistance to fuels and their good barrier properties.

Fluoropolymers are generally more expensive than polymers that do not contain fluorine. Therefore, materials have been developed in which the fluoropolymer is used in combination with other materials to reduce the overall cost of an article.

For example, hoses containing fluoropolymers are typically prepared as multi-layer articles using a relatively thin layer of a fluoropolymer, typically a fluoroelastomer, at the interface where chemical resistance is required, such as an inner or an outer layer. The other layers of such multi-layer hoses typically contain another fluoropolymers or non-fluorine containing elastomers, such as for example a silicone-containing polymers, ethylene acrylics. One of the requirements of those layered articles is a firm and reliable bond between the fluoropolymer layer and its adjacent layer(s). However, satisfactory bonding of a fluoropolymer to other polymers, in particular silicones, often has been proven difficult. Several methods for improving the bonding of fluoropolymers to other polymers have been proposed.

EP 1454740 A1 discloses the addition of a bonding agent to a fluoroelastomer that is curable by dehydrofluorination for improving the bonding strength to silicone rubbers. The bonding agent disclosed in EP 1454740 A1 is an organic compound that contains one or more nucleophilic groups capable of reacting with the reactive sites generated upon dehydrofluorination of the fluoropolymer. In addition to the nucleophilic groups, such as amine or hydroxy groups, the bonding agent has one or more functional groups selected from ethylenically unsaturated groups, a siloxy group having at least one hydrolysable group and mixtures thereof.

JP 2003019772 discloses the addition of a bonding agent to non-fluorine containing polymers to improve their bonding to a fluoroelastomer that is based on a vinylidene fluoride copolymer. The bonding agent is a silane containing one amino-bearing organic residue.

While the above described methods may improve the bonding, they are based on a curing mechanism involving a dehydrofluorination step by which a double bond is formed in the polymer backbone, a mechanism which is believed to follow an ionic path way.

Dehydrofluorination of the fluoropolymer is typically caused by a dehydrofluorinating agent and the so produced reactive sites can then further react with a suitable curing agent to cause vulcanization (cross-linking) of the fluoropolymer. However, it has been found that some fluoroelastomers obtained by a dehydrofluorination curing mechanism may be less resistant to chemicals (such as e.g. oils) and may have lower tensile strength compared to fluoroelastomers obtained by peroxide curing.

Contrary to curing by dehydrofluorination, peroxide curing is achieved by a radical curing reaction under the influence of a radical generating compound, typically an organic peroxide. Fluoropolymers become curable by a peroxide curing reaction by introducing into the fluoropolymers so-called cure sites, which are atoms or moieties that can react with the peroxides or the radicals generated by the peroxides and form a three-dimensional network between the fluoropolymers. Such cure sites are typically halogens, such as for example bromine or iodine. Generally, a coagent is also used in peroxide curing.

Due to their good chemical resistance, in particular to oils and hydrocarbon fuels, peroxide curable fluoropolymers are desired materials for components and articles used in motor vehicles, such as cars, motorbikes, aircraft and watercraft but also in appliances for storing, transporting or pumping fuels or chemicals in the fuel industry and also in the chemical industry. Therefore there is a need for improved bonding of a fluoropolymer, in particular a fluoropolymer curable by a radical curing reaction, such as a peroxide curing reaction, to other polymers and in particular to silicone polymers.

### 3. Summary

It has now been found that the bonding of fluoropolymers to other polymers can be improved such that a stronger bond between them can be generated when a silane-containing bonding promoter is used.

Therefore, in the following there is provided a method of bonding a first composition comprising a first polymer that first polymer being a fluoropolymer that is curable by a peroxide curing reaction to a second composition comprising a second polymer said second polymer being different from the first polymer, wherein the second polymer is selected from curable fluoropolymers and silicone containing polymers and wherein the first and second composition are free of a dehydrofluorination agent, the method comprises bringing the first composition in contact with the second composition such that a common interface is formed, curing at least the part of the compositions forming the common interface, wherein the curing is carried out in presence of a peroxide curing agent and a bonding promoter, wherein the bonding promoter corresponds to the general formula (I)

R₁QSi(R₂)ₓ(R₃)₃₋ₓ (I)

wherein R₁ represents CH₂=CX or 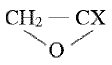 wherein X represents a halogen or a lower alkyl group having 1, 2, 3 or 4 carbon atoms, Q is a chemical bond or an organic linking group, each R₂ independently represents a linear, branched or cyclic alkyl or aryl group, each R₃ represents a halogen or a group OR₄, wherein each R₄ independently represents a linear, branched or cyclic alkyl or aryl group.

Additionally, there is provided a fluoropolymer composition comprising a fluoropolymer that is curable by peroxide curing reaction and the bonding promoter described above.

In another aspect there is provided a silicone polymer composition comprising the bonding promoter described above.

In yet another aspect there is provided the use of the fluoropolymer composition above for making articles comprising a fluoropolymer layer bonded to a layer comprising a different polymer, in particular a fluoropolymer or a silicone-containing polymer.

In another aspect there is provided the use of the silicone polymer composition above for making layered articles comprising a layer comprising a silicone polymer bonded to a fluoropolymer layer.

Additionally there is provided an article comprising a layer containing a fluoropolymer and layer comprising a different polymer said layers being at least partially in contact with each other thereby forming a common interface, wherein the interface comprises at least a section in which the fluoropolymer layer is bonded to the different polymer and wherein the bonding has been carried out according to the method described above.

The methods uses and compositions described herein may provide greater flexibility to the manufacturer of layered articles because the bonding promoter described herein may be incorporated into the fluoropolymer composition (or layer), in the composition (or layer) of the polymer to be bonded to the fluoropolymer (preferably a different fluoropolymer or a silicone-containing polymer) or in both and still satisfactory bonding strength may be achieved.

At least some of the embodiments described herein allow the generation of bond strength sufficient for preparing multi-layer articles for use in automotive applications.

At least some of the embodiments described herein generate a bond strength that can withstand prolonged aging at elevated temperature, for example a treatment at 200°C for 70 hours or even at 168 hours.

### 4. Detailed Description

Contrary to the use of "consisting", the use of "including," "containing", "comprising," or "having" and variations thereof is meant to encompass the items listed thereafter and equivalents thereof as well as additional items. The use of "consisting" is meant to exclude the presence of additional items.

The use of "a" or "an" is meant to encompass "one or more". Any numerical range recited herein is intended to include all values from the lower value to the upper value of that range. For example, a concentration range of from 1% to 50% is intended to be an abbreviation and to expressly disclose the values between the 1% and 50%, such as, for example, 2%, 40%, 10%, 30%, 1.5 %, 3.9 % and so forth.

Bonding of a composition containing a fluoropolymer (first polymer) that is curable by a peroxide curing reaction (first composition) to a composition (second composition) containing another polymer (second polymer) is carried out in the presence of a bonding promoter and a peroxide curing agent. The bonding promoter can be present in the first composition, in the second composition or in both, the first and second compositions.

The components of the compositions and methods of making or using them will be described in greater detail in the following.

### Bonding promoter:

The bonding promoter is a silane compound that contains at least one polymerisable group. Such groups include ethylenically unsaturated groups, epoxy groups or combinations thereof. Suitable bonding promoters can be represented by the following general formula:

R₁QSi(R₂)ₓ(R₃)₃₋ₓ (I)

wherein R₁ represents a polymerisable group, preferably an ethylenically unsaturated group or an epoxy group, Q is a chemical bond or an divalent organic linking group, each R₂ independently represents an alkyl group or an aryl group, each R₃ represents a halogen or a group OR₄, wherein each R₄ independently represents a linear, branched or cyclic alkyl group or aryl group. Examples of alkyl groups include but are not limited to methyl, ethyl, propyl, isopropyl, butyl, isobutyl, cyclobutyl, pentyl, hexyl, heptyl, tert.-butyl and neopentyl groups. The alkyl groups may be unsubstituted or may be substituted. Preferably, the substituents are non nucleophilic and include, for example, halogens, oxygens, alkoxy groups, other alkyl or aryl group, carboxyamide groups, carbonyl groups, and combinations thereof. Preferably, R₄ represents a linear or branched hydrocarbon in the form of an alkyl group, i.e. a non-substituted alkyl group.
x is 0, 1 or 2.
Q is a covalent bond linking R1 and Si of formula (I) or a divalent organic linking group linking Si with the residue R₁. The divalent organic linking group preferably contains from 1 to about 20 carbon atoms. In the case Q represents the divalent organic linking group, Q can optionally also contain oxygen, nitrogen, or sulfur-containing groups or a combination thereof. Q should typically be free of functional groups that substantially interfere with free-radical polymerization (e.g., polymerizable olefinic double bonds, thiols, and other such functionality known to those skilled in the art).

Examples of suitable linking groups Q include straight chain, branched chain or cyclic alkylenes, arylenes, aralkylenes, oxyalkylenes, carbonyloxyalkylenes (-COOR, wherein R represents the alkylene residue), carboxyaminoalkylenes, and combinations thereof. Preferred linking groups include alkylene groups, oxyalkylene groups and carbonyloxyalkylene groups.

In one embodiment the group R₁ represents an ethylenically unsaturated group and the bonding promoter is a silane derived from, for example, vinyl, vinyl ethers, vinyl esters, allyl esters, allyl ethers, vinyl ketones, styrene, vinyl amide, acrylamides, acrylates and methacrylates. Of these vinyl, acrylates and methacrylates are preferred.

In a particular embodiment, the bonding promoter having an ethylenically unsaturated group corresponds to the formula (II):

CH₂=CX-COO-(CH₂)_{g}-Si(R₅)ₓ(R₆)₃₋ₓ (II)

wherein X is H, methyl, ethyl, propyl, butyl, isopropyl, preferably H or methyl,
g is 1, 2, 3 or 4, x is 0, 1 or 2,
R₅ is an alkyl group, preferably a methyl group, R₆ represents a halogen or a group OR₇, wherein each R₇ independently represents an alkyl group. Preferably R₇ is independently methyl or ethyl or all R₇ are methyl or ethyl.

Both R₅ and R₇ may be linear, branched or cyclic. Examples of alkyl groups include but are not limited to methyl, ethyl, propyl, isopropyl, butyl, isobutyl, cyclobutyl, pentyl, hexyl, heptyl, tert.-butyl and neopentyl groups. The alkyl groups may be unsubstituted or may be substituted. Preferably, the substituents are non nucleophilic and include, for example, halogens, oxygens, alkoxy groups, other alkyl or aryl group, carboxyamide groups, carbonyl groups, and combinations thereof. Preferably, R₅ and R₇ represent a linear or branched hydrocarbon in the form of an alkyl group, i.e. a non-substituted alkyl group.

Suitable examples for silanes according to formula (II) include, but are not limited to, gamma(γ)-acryloxypropyltrimethoxysilane, γ-acryloxypropyl methyldimethoxysilane; γ-methacryloxypropyltrimethoxysilane, γ-methacryloxypropyl methyldimethoxysilane γ-acryloxypropyltriethoxysilane, γ-acryloxypropyl methyldiethoxysilane, γ-methacryloxypropyltriethoxysilane and γ-methacryloxypropyl methyldiethoxysilane. Bonding promoters according to formula (II) are commercially available and include, for example, those available under the trade designation Z-6030 Silane (available from Dow Coming) and Silquest A-174 Silane (available from Momentive).

In a further embodiment, the bonding promoter having an ethylenically unsaturated group can be represented by formula (III):

CH₂=CH-Si(R₅)ₓ(R₆)₃₋ₓ (III).

In formula (III) x is 0, 1 or 2, R₅ is an alkyl group as defined in formula (II) above, preferably a methyl group, R₆ represents a halogen or a group OR₇, wherein each R₇ independently represents an alkyl group as defined in formula (II) above. Preferably R₇ is independently methyl or ethyl or all R₇ are methyl or ethyl.

Suitable examples of bonding promoters according to formula (III) include vinyl triethoxysilane, available from Polysciences, Inc. and vinyl trimethoxysilane, commercially available under the trade designation Silquest™ A-171 Silane (available from Momentive) and Z-6300 Silane (available from Dow Coming).

In another embodiment the group R₁ represents an epoxy group and the bonding promoter can be represented by the formula (IV):

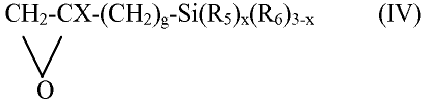

Wherein X, R₅, R₆, g and x are as defined above with respect to formula (II) and (III). Suitable examples of bonding promoters according to formula (IV) include, for example, glycidoxy propyl trimethoxysilane, commercially available under the trade designation Z-6040 Silane (available from Dow Coming) and Silquest™ A-187 Silane (available from Momentive).

The optimum amounts of bonding promoters to be used typically depends on the nature of the bonding promoter and the other components of the composition to which the bonding promoter is added. Optimum amounts can be readily determined by routine experimentation. Typical amounts of bonding promoter when added to the fluoropolymer composition are between 0.1 and 10% by weight, preferably between 0.5 and 5% by weight based on the weight of fluoropolymer. When added to the silicone composition, the bonding promoter is generally used in an amount of 0.1 to 15% by weight, preferably between 1 and 10% by weight based on the weight of silicone in the composition. When added to both the fluoropolymer composition and the silicone composition, the bonding promoter is generally used in an amount of 0.1 to 5% by weight in the fluoropolymer composition (based on the weight of the fluoropolymer) and in an amount of 0.1 to 10% by weight in the silicone composition (based on the weight of the silicone polymer in the composition).

### First compositions:

The first composition is a composition containing at least one fluoropolymer. It may contain more than 50% by weight, or even more than 75% by weight of fluoropolymer(s) based on the total weight of the composition. The composition may also consist of one or more fluoropolymers or may essentially consist of one or more fluoropolymers, which means that the composition contains at least 80% weight based on the total weight of the composition of fluoropolymers.

The composition is preferably a solid composition. The composition may be in the form of a sheet, a layer or a laminate. Most preferably the composition is a layer or a sheet.

The fluoropolymer may have partially or fully fluorinated backbone. Suitable fluoropolymers are those that have a backbone that is at least 30% by weight fluorinated, preferably at least 50% by weight fluorinated, more preferably at least 65% by weight fluorinated. Examples of fluoropolymers include polymers and copolymers of one or more fluorinated monomers in combination with one or more other fluorinated monomer and/or one or more non-fluorinated monomers. Examples of fluorinated monomers include fluorinated C₂-C₈ olefins that may or may not have hydrogen and/or chlorine atoms such as tetrafluoroethylene (TFE), chlorotrifluoroethylene (CTFE), 2-chloropentafluoropropene, dichlorodifluoroethylene, vinyl fluoride, vinylidene fluoride (VDF), fluorinated alkyl vinyl monomers such as hexafluoropropylene (HFP); fluorinated vinyl ethers, including perfluorinated vinyl ethers (collectively referred to as PVE) and fluorinated allyl ethers including perfluorinated allyl ethers (collectively referred to as PAE). Suitable non-fluorinated comonomers include vinyl chloride, vinylidene chloride and C₂-C₈ olefins such as ethylene (E) and propylene (P).

The fluoropolymer is generally substantially amorphous. This means the polymer has no melting point or no distinct melting point but rather a melting range extending over at least 10°C, for example a melting range of from 270 to 285°C. Amorphous fluoropolymers include, for example, but are not limited to copolymers of vinylidene fluoride and at least one terminally ethylenically-unsaturated fluoromonomer containing at least one fluorine atom substituent on each double-bonded carbon atom, each carbon atom of said fluoromonomer being substituted only with fluorine and optionally with chlorine, hydrogen, a lower fluoroalkyl radical, or a lower fluoroalkoxy radical. Specific examples of copolymers include for example copolymers having a combination of monomers as follows: VDF-HFP, TFE-P, VDF-TFE-HFP, VDF-TFE-PVE, TFE-PVE, E-TFE-PVE and any of the aforementioned copolymers further including units derived from a chlorine containing monomer such as CTFE. Still further examples of suitable amorphous copolymers include copolymers having a combination of monomers as in CTFE-P.

Preferred amorphous fluoropolymers generally comprise from 20 to 85%, preferably 50 to 80% by moles of repeating units derived from VDF and TFE, which may or may not be copolymerized with one or more other fluorinated ethylenically unsaturated monomer, such as HFP and/or one or more non fluorinated C₂-C₈ olefins, such as ethylene and propylene.

The units derived from the fluorinated ethylenically unsaturated comonomer when present is generally between 5 and 45 mole %, preferably between 10 and 40 mole %. The amount of non-fluorinated comonomer when present is generally between 0 and 50 mole %, preferably between 1 and 30 mole %.

The fluoropolymers are curable and can be cross-linked. The fluoropolymers are already elastic or become elastic after curing or their elasticity can be improved by curing. Typically, elastic polymers can be stretched upon application of a force but retain their original shape once that force is no longer applied.

The fluoropolymers are curable by a peroxide curing reaction. This means the fluoropolymers are curable by one or more peroxide curing agents or the radicals generated by the peroxide curing agents. Coagents may be used in combination with peroxide curing agent(s). Fluoropolymers that are curable by peroxide curing reaction typically contain one or more group that is (are) capable of participating in a peroxide curing reaction. Such groups react with the peroxide agent or a radical generated by the curing agent and form cross-links. The polymer may then form a three-dimensional network and becomes elastic or becomes more elastic. Typical groups capable of participating in a peroxide curing reaction include halogens (other than fluorine, and preferably chlorine, bromine and iodine, most preferably bromine and iodine) and nitrile groups. The groups capable of participating in a peroxide curing reaction may be distributed along the polymer chain and/or may be contained in the end groups of the fluoropolymer. Typically, the amount of these groups (in particular bromine and/or iodine) contained in the fluoropolymer is between 0.001 and 5%, preferably between 0.01 and 2.5%, by weight with respect to the total weight of the fluoropolymer.

To introduce halogens capable of participating in the peroxide curing reaction along the chain, the cure-site monomers may be used in the polymerisation of the fluoropolymer (see for instance EP 2 110 251 A1, US Patent No 4,831,085, and US Patent No 4,214,060). Such comonomers include, for example, but are not limited to:
(a) bromo- or iodo- (per)fluoroalkyl-(per)fluorovinylethers having the general formula:

   ZRf-O-CX=CX₂

   wherein each X may be the same or different and represents H or F, Z is Br or I, Rf is a (per)fluoroalkylene containing from 1 to 12 carbon atoms, optionally containing chlorine and/or ether oxygen atoms.
   Suitable examples include BrCF₂-O-CF=CF₂, BrCF₂CF₂-O-CF=CF₂, Br CF₂CF₂CF₂-O-CF=CF₂, CF₃CFBrCF₂-O-CF=CF₂;
(b) bromo- or iodo perfluoroolefins such as those having the formula:

   Z'-(Rf')ᵣ-CX=CX₂

   wherein each X independently represents H or F, Z' is Br or I, Rf' is a perfluoroalkylene containing from 1 to 12 carbon atoms, optionally containing chlorine atoms and r is 0 or 1; and
(c) non-fluorinated bromo and iodo-olefins such as vinyl bromide, 4-bromo-1-butene and 4-iodo-1-butene.

Specific examples include: bromotrifluoroethylene, 4-bromo-perfluorobutene-1, or bromofluoroolefins such as 1-bromo-2,2-difluoroethylene and 4-bromo-3,3,4,4-tetrafluorobutene-1.

The term "(per)fluoro" used above and below means the compound or residue may be fluorinated or perfluorinated. "Fluorinated" means the compound or residue contains one or more fluorines. The term "perfluorinated" denotes a compound or residue in which all hydrocarbon atoms have been replaced by fluorine atoms. For example a "perfluoromethyl" group is a -CF₃ group, wherein a "fluorinated" methyl group includes - CHF₂, -CH₂F and -CF₃.

Instead of or in addition to cure sites distributed along the polymer chain, the cure sites may be located in a terminal position of the polymer, for example as the result of using a suitable reaction initiator or a suitable chain transfer agent in the reaction medium during the polymer preparation, as described, for example, in EP 101 930 A1.

Examples of suitable chain transfer agents include those having the formula RfPₓ, wherein P is Br or I, Rf is a x-valent (per)fluoroalkyl radical having from 1 to 12 carbon atoms, optionally containing chlorine atoms, while x is 1 or 2. Specific examples include CF₂Br₂, Br(CF₂)₂Br, Br(CF₂)₄Br, CF₂ClBr, CF₃CFBrCF₂Br, I(CF₂)₂I, I(CF₂)₄I (Further examples of suitable chain transfer agents are disclosed, for example, in US Patent No. 4,000,356, EP 407 937 A1 and US Patent No. 4,243,770. Further examples of chain transfer agents include non fluorinated chain transfer agents such as di-iodomethane or di-bromomethane.

Examples of useful initiators include those of the general formula X(CF₂)ₙSO₂Na with n=1 to 10 (where X is Br or I). Still further, the initiation and/or polymerization may be conducted in the presence of a halide salt such as a metal or ammonium halide including for example potassium chloride, sodium chloride, potassium bromide, ammonium bromide or chloride and potassium or sodium iodide to introduce a halide in a terminal position of the fluoropolymer.

Additionally, cure-site components may derive from nitrile containing monomers used in the polymerisation of the fluoropolymer. Examples of nitrile containing monomers include but are not limited to:

CF₂=CF-CF₂-O-Rf-CN ;

CF₂=CFO(CF₂)ᵣCN ; CF₂=CFO[CF₂CF(CF₃)O]ₚ(CF₂)ᵥOCF(CF₃)CN ;

CF₂=CF[OCF₂CF(CF₃)]ₖO(CF₂)ᵤCN

wherein, r represents an integer of 2 to 12; p represents an integer of 0 to 4; k represents 1 or 2; v represents an integer of 0 to 6; u represents an integer of 1 to 6, Rf is a perfluoroalkylene or a bivalent perfluoroether group. Specific examples of nitrile containing fluorinated monomers include perfluoro (8-cyano-5-methyl-3,6-dioxa-1-octene), CF₂=CFO(CF₂)₅CN, and CF₂=CFO(CF₂)₃OCF(CF₃)CN.

The fluoropolymers can be made in accordance with any of the known polymerization methods for making fluoropolymers. Such methods include without limitation, aqueous emulsion polymerization, suspension polymerization and polymerization in an organic solvent. The fluoropolymer typically will have Mooney viscosities (ML1+10 at 120°C) of 1 to 150 units, suitably 2 to 100 units. Mooney viscosities can be measured, for example, according to ASTM D 1646. The molecular weight distribution can be mono-modal, bimodal or multi-modal.

The first composition and also the second composition do not require the presence of a dehydrofluorination agent to provide sufficient bonding of the fluoropolymer to the other polymer and in particular to a silicone polymer or another fluoropolymer. Therefore, the first and the second composition may be free of a dehydrofluorination agent or may be essentially free of a dehydrofluorination agent. "Essentially free of dehydrofluorination agent" means the amount of dehydroflourination agent in the first and second or in the composition containing first and second composition may be greater than 0 but less than 0.01 parts per 100 parts of fluoropolymer. A dehydrofluorination agent is an agent that is capable to react with the fluoropolymer to generate a double bond in the fluoropolymer backbone, preferably at curing conditions, for example subjecting a fluoropolymer composition to a temperature of 120°C to 200°C for a period of 1 to 120 minutes. Examples of dehydrofluorination agents include organo-oniums, such as triphenylbenzyl phosphonium chloride, tributylallyl pghosphonium chloride, tributylbenzyl ammonium chloride, tetrabenzyl ammonium bromide, triaryl sulfonium chloride, 8-benzyl-1,8-diazabicyclo[5.4.0]-7-undecenium chloride, benzyl tris(dimethylamino) phosphonium chloride, benzyl(diethylamino)diphenylphosphonium chloride, and bases such as 1.8 diaza[5.4.0]bicycle undec-7-ene (DBU) and 1,5-diazabicyclo[4.3.0]-5-nonene (DBN). The first compositions as provided herein may be prepared by mixing one or more fluoropolymers with additional ingredients in conventional rubber processing equipment. Such equipment includes rubber mills, internal mixers, such as Banbury mixers, and mixing extruders. Such additional ingredients may include, for example, one or more peroxide curing agents and optionally one or more coagents and, optionally, one or more bonding promoter. The composition may further contain acid acceptors as are commonly used in the preparation of fluoroelastomer layers or laminates. Such acid acceptors can be inorganic or blends of inorganic and organic acid acceptors. Examples of inorganic acceptors include magnesium oxide, lead oxide, calcium oxide, calcium hydroxide, dibasic lead phosphate, zinc oxide, barium carbonate, strontium hydroxide, calcium carbonate, hydrotalcite. Organic acceptors include epoxies, sodium stearate, and magnesium oxalate.

Particularly suitable acid acceptors include magnesium oxide and zinc oxide. Blends of acid acceptors may be used as well. The amount of acid acceptor will generally depend on the nature of the acid acceptor used. Typically, the amount of acid acceptor used is between 0.5 and 5 parts per 100 parts of fluoropolymer.

The first compositions may contain further additives, such as, for example, carbon black, stabilizers, plasticizers, lubricants, fillers, and processing aids typically utilized in fluoropolymer compounding, provided they have adequate stability for the intended service conditions.

The resulting compositions may then be formed into sheets, layers or laminates or processed otherwise as for example described below.

It is further possible to prepare a so-called premix. The premix comprises the fluoropolymer(s) and part of other components of the final fluoropolymer composition formed into a layer, sheet or laminate, but not all of them. The composition of such a premix will depend on desired stability of the premix over a desired period of storage. For example, the premix may comprise the fluoropolymer(s), optionally the bonding promoter and one or more components of a peroxide curing system but not all of the components necessary to cure the composition. For example, it may be desired to exclude the peroxide curing agent from the premix and only add the peroxide at the time of shaping the composition into a structure, such a sheet, layer or laminate.

### Peroxide curing agents:

The peroxide curing agents typically comprise an organic peroxide. Suitable organic peroxides are those which generate free radicals at the temperatures used in the curing (typically, temperatures of 120°C to 200°C, or from 140°C to 180°C). Dialkyl peroxides or bis(dialkyl peroxides) which decompose at a temperature above 50°C are especially preferred. In many cases it is preferred to use a di-tertiarybutyl peroxide having a tertiary carbon atom attached to the peroxy oxygen. Among the most useful peroxides of this type are 2,5-dimethyl-2,5-di(tertiarybutylperoxy)hexyne-3 and 2,5-dimethyl-2,5-di(tertiarybutylperoxy)hexane. Other peroxides include, for example, dicumyl peroxide, dibenzoyl peroxide, tertiarybutyl perbenzoate, alpha,alpha'-bis(t-butylperoxy-diisopropylbenzene), and di[1,3-dimethyl-3-(t-butylperoxy)-butyl]carbonate. Generally, about 1 to 5 parts of peroxide curing agent per 100 parts of fluoropolymer are used. Peroxide curing agents are commercially available, for example, under the trade designations Perkadox, Luperco and Trigonox.

The peroxide curing agents may be used in combination with one or more coagents. The coagent may increase the curing speed and/or lower the curing temperature and/or improving the curing result. Typically, the coagent is composed of a polyunsaturated compound, such as bisolefins, triallyl, divinyl, trivinly and divinyl compounds. The coagents may be added in an amount of between 0.1 and 10 parts per hundred parts fluoropolymer, preferably between 2 and 5 parts per hundred parts fluoropolymer. Examples of useful coagents include triallyl cyanurate; triallyl isocyanurate; triallyl trimellitate; tri(methylallyl)isocyanurate; tris(diallylamine)-s-triazine; triallyl phosphite; N,N-diallyl acrylamide; hexaallyl phosphoramide; N,N,N',N'-tetraalkyl tetraphthalamide; N,N,N',N'-tetraallyl inalonamide; trivinyl isocyanurate; 2,4,6-trivinyl methyltrisiloxane; N,N'-m-phenylenebismaleimide; diallyl-phthalate and tri(5-norbornene-2-methylene)cyanurate. Particularly useful is triallyl isocyanurate. Other useful coagents include the bis-olefins disclosed in EP 0661304 A1 and EP 0769521 A1.

The peroxide curing agents are preferably contained in the first composition but may also be comprised in the second composition or in both. It is also contemplated to introduce the peroxide curing agent in a separate composition which is placed between first and second composition prior to curing.

### Second Compositions:

The second composition contains a second polymer. Typically, it may contain more than 50% by weight, or even more than 75% by weight of polymers, in particular of second polymers based on the total weight of the composition. The composition may also consist of one or more second polymer or may essentially consist of one or more second polymer(s), which means that the composition contains at least 90% weight based on the total weight of the composition of second polymers.

The second polymer may be a fluoropolymer including those as described above. The second polymer may be the same or a different fluoropolymer as the first fluoropolymer, Preferably, the second polymer, when being a fluoropolymer, is a polymer containing repeating units derived from VDF, a polymer comprising repeating units derived from VDF and TFE, or a polymer comprising repeating units derived from TFE, HFP and VDF.

The second polymer may also be a non-fluorinated polymer. Examples include polybutadienes, butadiene-styrene polymers, propylene-butadiene polymers, epichlorohydrine polymers, acrylic rubbers. Preferably the second polymer is curable.

The second composition may be prepared as described above for the first composition and it may contain the same ingredients as described above for the first composition.

The second polymer may also be a silicone-containing polymer. The silicone-containing polymer is typically a polysiloxane. A polysiloxane comprises repeating -Si-O-Si- units. Typically, the polysiloxanes comprise polydimethylsiloxane. The silicone-containing polymers are preferably curable. The curable polymers become elastic upon curing or they elastic properties are increased upon curing. Cured or partially cured silicone-containing polymers (also referred to as "silicone rubbers") are elastomeric, which means they have elastic properties. The silicone-containing polymers may be curable by a peroxide curing reaction. Such peroxide curable silicone-containing polymers typically comprise methyl and/or vinyl groups. The same peroxide curing agents or combinations of peroxide curing agents and coagents as described above with respect to the peroxide-curable fluoropolymers may be used.

The cross-link density of the cured silicone polymer depends on both the vinyl or methyl level of the silicone polymer and the amount of peroxide curing agent. The peroxide curing agent is typically used in amount between 0.1 to 10 parts per hundred parts of the curable silicone polymer. Particularly suitable are levels between 0.5 to 3 parts per hundred parts of silicone polymer. The peroxide curing agents used in the second composition may be adjusted to the ones used in the first composition, such for example that the same or different agents may be used. For example, different agents which are activated at different temperatures can be used in the compositions such that the fluoropolymer of the first composition can be cured before or after the polymer of the second composition.

Peroxide curable silicone polymers are commercially available, for example under the trade designation Elastosil R 401/60 and Elastosil R 760/70, available from Wacker Chemie AG.

The silicone-containing polymer may also be metal curable. This means they can be cured by a so-called addition curing system. In this system the polymers are cured by using a metal catalyst. A preferred metal catalyst is platinum, especially platinum salts or platinum complexes having organic ligands or residues and the corresponding curable silicones are referred to as "platinum-curable". Silicone-containing polymers that are metal curable typically contain vinyl groups.

The silicone polymer composition may also contain silicones comprising Si-H groups. Those silicones may act as cross-linkers.

Metal-curable silicone polymers can be used as a one-part silicone system or a two part silicone system. One part metal (platinum) curable silicone polymers are commercially available, for example under the trade designation Elastosil R plus 4450/60 and Elastosil R plus 4110/70, available from Wacker Chemie AG. In a two part silicone system, also referred to as liquid silicone rubber (LSR), a vinyl-functional silicone polymer (typically identified as part A) is vulcanised in presence of a silicone having Si-H groups (part B). Part A typically contains the platinum catalyst. Two part platinum curable silicone sytems are commercially available, for example under the trade designation Elastosil R 533/60 A/B and Elastosil LR 7665, available from Wacker Chemie, AG and Silastic 9252/900P, available from Dow Coming.

Examples of useful platinum catalysts are known in the art. The platinum catalyst is typically used in amounts between 2 and 200 ppm platinum.

In addition to the silicone-containing polymers the second composition may contain curing agents, catalysts and cross-linkers, including, for example, the curing agents, coagents, cross-linker and catalysts described above. The silicone polymer composition may further include other additives, such as, for example, fillers, process aids, antioxidants, pigments to obtain certain performance characteristics. For example silica, in particular fumed silica, is a common filler used to reinforce strength properties. Other common additives include precipitated silica, titanium dioxide, calcium carbonate, magnesium oxide and ferric oxide.

A composition containing one or more peroxide curable silicone-containing polymers may be prepared, for example, by mixing the ingredients in conventional rubber processing equipment. Such equipment includes rubber mills, internal mixers, such as Banbury mixers, and mixing extruders.

The two part silicone compositions may be prepared by mixing part A with part B, and optionally other ingredients using common mixing means, such as a drum roller, a mechanical stirrer or a mixer.

It is understood that various different polymers may be used and also combinations of silicone polymer and fluoropolymers or silicone polymers containing fluorinated moieties may be used.

The second composition is preferably in the form of a layer, a sheet or a film.

### Methods of bonding:

Bonding is achieved by contacting the first and second composition such that a common interface is formed. The compositions are then subjected to conditions at which at least the first polymer, preferably also the second polymer cure. It may be sufficient to cure locally, i.e. to cure only the parts of the compositions that form the common interface. Curing is carried out in the presence of the peroxide curing agent and the bonding promoter, although further ingredients, such as for example a curing coagent may also be present during the curing.

For bonding the first composition is typically provided in the form of a layer, a sheet, a film or a laminate. It is brought into contact with the second composition, which, preferably is also in the form of a layer, sheet, film or laminate. However both compositions may be contacted in molten form for example during co-extrusion or injection molding. It is also possible to coat, for example, the second composition to the first composition, for example the second composition may be a liquid or in the form of a liquid coating composition.

The compositions may then be laminated together in the presence of peroxide curing agent and bonding promoter using effective heat and pressure for an effective period of time to create a strong bond or just subjected to a heat treatment. Preferably the conditions employed allow for the curing reaction(s) to proceed.

Curing and bonding may be effected by heating the first composition while being in contact with second composition to a temperature of 120°C to 200°C for 1 to 120 min (preferably 140°C to 180°C and for 3 to 60 min.). The heating may be carried out while simultaneously applying pressure.

Articles, such as for example multi-layer articles, having one or more fluoropolymer containing layers bonded to one or more silicone-containing polymer containing layers can be produced by any of the known methods for making multi-layer articles. For example, the layers of the multilayer article can be prepared in the form of thin films or sheets and then laminated together by application of heat and pressure to form a bonded multi-layer article. Alternative methods include coextrusion, sequential extrusion, and injection molding to name a few. It is also possible to prepare a multilayer article by a repeated cycle of coating a liquid silicone polymer composition onto a layer of a fluoropolymer composition. It is also possible to form one or more of the individual layers by extrusion coating, e.g., using a crosshead die. The heat and pressure of the method by which the layers are brought together (e.g. extrusion or lamination) can be sufficient to provide adequate adhesion between the layers. It may, however, be desirable to further treat the resulting article, for example, with additional heat, pressure, or both, to enhance the bond strength between the layers and to post cure the laminate. One way of supplying additional heat when the multi-layer article is prepared by extrusion is by delaying the cooling of the multi-layer article at the conclusion of the extrusion process.

Alternatively, additional heat energy can be added to the multi-layer article by laminating or extruding the layers at a temperature higher than necessary for merely processing the components. As another alternative, the finished multi-layer article can be held at an elevated temperature for an extended period of time. For example, the finished article can be placed in a separate apparatus for elevating the temperature of the article such as an oven, an autoclave or heated liquid bath. Combinations of these methods can also be used. Several articles in which a fluoropolymer containing layer is bonded to another polymer layer, preferably a layer containing another fluoropolymer or a silicone-containing polymer, can be made according to the invention. Such articles include hoses, tubes, O-rings, seals, diaphragms, valves, containers or simple laminates. Those articles may be used, for example in motor vehicles, such as motorcrafts, aircrafts and water crafts and include turbo charger hoses, fuel lines, fuel tanks. Articles may also be used in medical applications, for examples as tubes, hoses or lining in a medical apparatus or valves, O-rings and seals in a medical apparatus or device.

Hoses can be made in which a layer of fluoropolymer (typically an elastomer), generally as an innermost layer, is bonded to a silicone polymer (typically a silicone rubber), as the outer layer or as a middle layer.

The compositions may be used to improve the resistance of hydrocarbon fumes or hydrocarbon liquids, for example of a material or a component of an article.

The following examples are provided to illustrate certain embodiments but are not meant to be limited in any way. Prior to that some test methods used to characterize materials and their properties will be described. Unless specified otherwise, percentages are percentages by weight with respect to the mass of the total compositions and add up in each case to 100 weight percent.

### EXAMPLES

### Abbreviations:

MT N-990: carbon black, medium thermal grade, available from Evonik
TAIC (70%): triallyl-isocyanurate, 70% on silicate carrier, available from Lehmann & Voss
Trigonox®101-50D: organic peroxide, 50% active on silica carrier, available from Akzo Nobel
ZnO: zinc oxide, available from Lanxess
Struktol® HT290: Processing additive for Fluorinated Rubbers (blend of fatty acid derivatives and waxes), available from Schill + Seilacher

### Silane bonding promoters according to the invention

SIL-1: Z-6030 Silane: methacryloylpropyl trimethoxysilane, available from Dow Coming
SIL-2: Z-6300 Silane: vinyltrimethoxysilane, available from Dow Coming
SIL-3: Z-6040 Silane: glycidoxypropyl trimethoxysilane, available from Dow Coming

### Comparative silane compounds

C-SIL-1: Z-6011 Silane: aminopropyl triethoxysilane, available from Dow Coming
C-SIL-2: Dynasilan® 6498 DL70: vinyl functional alkoxy siloxane, commercially available from Evonik

### Silicone polymers

Curable silicone layers were prepared on a two roll mill. All silicone polymers compositions were obtained from Wacker Chemie AG. To the silicone compositions was optionally added a silane bonding promoter as indicated in the examples.
Compound A: peroxide curable silicone layer made by mixing Elastosil® R 401/60 with 1.5% Trigonox® 101-50.
Compound B: Elastosil® R 760/70: peroxide curable silicone, comprising peroxide.
Compound C: Elastosil® R plus 4450/60: one part platinum curable silicone, comprising Pt catalyst.
Compound D: Elastosil® LR 7655 A+B: two part platinum curable silicone, comprising Pt catalyst.

### Peroxide curable fluoropolymers (FP) and fluoropolymer compounds (FPC)

FP-1: A peroxide curable fluoropolymer, having interpolymerized units of 52% by weight vinylidenefluoride (VDF), 12.8% tetrafluoroethylene (TFE), 35% hexafluoropropene (HFP) that further contained 0.2% wt bromine cure sites and 0.1% wt iodine cure sites and had a Mooney viscosity of 43 (ML 1+10 at 120°C).
FPC-1: Peroxide curable fluoropolymer compound FPC-1, was prepared on a two-roll mill by mixing 100 parts of the fluoropolymers FP-1 with 30 parts MT N-990, 3 parts Trigonox®101-50D, 3.5 parts TAIC, 3 parts ZnO and 1 part Structol® HT290 and optionally the silane bonding promoter as given in the respective examples. All parts are parts by weight as is custom in the rubber industry. The fluropolymer compounds were obtained in the form of sheets.
FP-2: A peroxide curable fluoropolymer having interpolymerized units of 52% by weight VDF, 14.4% TFE and 33.6% HFP. The fluoropolymer further contained 0.3% by wt. bromine cure sites and 0.1% by wt. iodine cure sides. The fluoropolymer had a Mooney viscosity of 43 (ML 1+10 at 120°C).
FPC-2: Peroxide curable fluoropolymer compound FPC-2, was prepared on a two-roll mill by mixing 100 parts of the fluoropolymers FP-2 with 30 parts MT N-990, 4 parts Trigonox®101-50D, 2 parts TAIC, 1 part DHT-4V and 1 part Structol® HT290 and optionally the silane bonding promoter as given in the respective examples. All parts are parts by weight as is custom in the rubber industry. The fluropolymer compounds were obtained in the form of sheets.

### Preparation of laminated sheets:

Sheets of fluoropolymer compounds and peroxide curable silicones or one part platinum curable silicones, prepared in a 2 roll mill, were laminated in a hot press (Agila 96/90) at 177°C for 30 min. Prior to the actual lamination, two narrow strips of polyester film were inserted between the two sheets, at an edge, to create two tabs for insertion into an Instron® mechanical tester. After cooling to room temperature for 4 hours, the laminated sheets were cut in strips having a width of 1 to 2 cm.

The adhesion between the two layers was evaluated in accordance with ASTM D-1876, commonly known as a 'T-peel' test, using the Instron® mechanical tester. Cross-head speed was 50 mm/min. The results reported are the average values of at least three specimens. No post curing was applied to these laminates.

### Preparation of laminates of fluoropolymer sheets and liquid silicone rubber:

2 part Pt curable silicone system was mixed and coated onto a sheet of fluoropolymer compound, using a rectangular frame. Two narrow strips of polyester film were inserted between the fluoropolymer sheet and the silicone polymers, at an edge, to create two tabs for insertion into an Instron® mechanical tester. A cover sheet was placed on top of the silicone rubber and the laminate was cured in a hot press (Agila 96/90) at 177°C for 30 min. The cured laminate was evaluated as above. No post curing was applied to these laminates.

### Examples 1 to 4 and reference examples Ref-1 to Ref-3

In examples 1 to 4 laminates were made between fluoropolymer compound FPC-1, containing 1.5 parts silane bonding promoter SIL-1 and different curable silicone compounds (A-D) as given in table 1. The laminates were made according to the general procedure. Reference examples Ref-1 to Ref-3 were made in the same way, but without addition of silane bonding promoter. The laminates were cured for 30 min at 177°C and then cooled to room temperature before the bond strength was evaluated. The results are given in table 1. The indication (RT) means rubber tear. When rubber tear was observed the bond was stronger than the cured rubber. The bond strength measurements resulted in breaking the rubber but not the bond between the two rubbers. The indication 'IF" means interfacial separation. In that case the bond at the interface between the polymer breaks.

**Table 1**

| Example | Fluoropolymer layer | Silicone layer | Bonding strength in kN/m (Type of failure) |
|---|---|---|---|
| 1 | FPC-1 + 1.5 parts SIL-1 | Compound A | (RT) |
| 2 | FPC-1 + 1.5 parts SIL-1 | Compound B | (RT) |
| 3 | FPC-1 + 1.5 parts SIL-1 | Compound C | (RT) |
| 4 | FPC-1 + 1.5 parts SIL-1 | Compound D | (RT) |
| Ref-1 | FPC-1 | Compound A | 0.8 (IF) |
| Ref-2 | FPC-1 | Compound B | 0.3 (IF) |
| Ref-3 | FPC-1 | Compound C | 0.7 (IF) |

| | | | |
|---|---|---|---|
| RT: Rubber Tear ; IF: interfacial separation | | | |

### Examples 5 to 16 and comparative examples C-1 to C-8

In examples 5 to 16 different silane bonding promoters were mixed with the fluoropolymer compound FPC-1 in amounts (in parts per hundred parts fluoropolymer) as given in table 2. These fluoropolymer compounds were then laminated against compounds A and B according to the general procedure. Comparative examples C-1 to C-8 were made in the same way, but with comparative silane compounds in amounts as given in table 2. The laminates were cured for 30 min at 177°C, then cooled to room temperature. The bond strength was evaluated and the results are given in table 2. Examples 5 to 8 were heat aged at 200°C for 70 hours and for 168 hours. After cooling to room temperature and conditioning for 24 hours, the bond strength was evaluated. The results are given in table 3.

**Table 2 Composition of laminates, parts silane in fluoropolymer**

| Ex | Compound A/B | FPC-1 + silane bonding promoter | Bond strength in kN/m (type of failure) |
|---|---|---|---|
| 5 | A | 3.5 parts SIL-1 | (RT) |
| 6 | B | 3.5 parts SIL-1 | (RT) |
| 7 | A | 2.1 parts SIL-1 | (RT) |
| 8 | B | 2.1 parts SIL-1 | (RT) |
| 9 | A | 5 parts SIL-2 | (RT) |
| 10 | B | 5 parts SIL-2 | (RT) |
| 11 | A | 3 parts SIL-2 | (RT) |
| 12 | B | 3 parts SIL-2 | (RT) |
| 13 | A | 3.5 parts SIL-3 | (RT) |
| 14 | B | 3.5 parts SIL-3 | (RT) |
| 15 | A | 2.1 parts SIL-3 | (RT) |
| 16 | B | 2.1 parts SIL-3 | (RT) |
| C-1 | A | 3.5 parts C-SIL-1 | 0.2 (IF) |
| C-2 | B | 3.5 parts C-SIL-1 | 0.7 (IF) |
| C-3 | A | 2.1 parts C-SIL-1 | 1.5 (IF) |
| C-4 | B | 2.1 parts C-SIL-1 | 4.1 (IF) |
| C-5 | A | 3.5 parts C-SIL-2 | 0.9 (IF) |
| C-6 | B | 3.5 parts C-SIL-2 | 2.8 (IF) |
| C-7 | A | 2.1 parts C-SIL-2 | 2.0 (IF) |
| C-8 | B | 2.1 parts C-SIL-2 | 5.3 (IF) |

| | | | |
|---|---|---|---|
| RT: Rubber Tear ; IF: interfacial separation | | | |

**Table 3 heat aging: bond strength in kN/m (type of failure):**

| Example | Initial | 70hrs 200°C | 168 hrs 200°C |
|---|---|---|---|
| 5 | (RT) | (RT) | (RT) |
| 6 | (RT) | 0.3 (IF) | 0.6 (IF) |
| 7 | (RT) | (RT) | (RT) |
| 8 | (RT) | 0.3 (IF) | 0.3 (IF) |

| | | | |
|---|---|---|---|
| RT: Rubber Tear ; IF: interfacial separation | | | |

### Examples 17 to 19 and reference example Ref-4

In examples 17 to 19, laminates were made between the fluoropolymer compound FPC-2 and silicone compound B (to which was added 1.5 parts Trigonox® 101-50D). Silane bonding promoter SIL-1 was added to the fluoropolymer compound (ex 17), to the silicone compound (ex 18) or to both compounds (ex 19) in amounts as given in table 4. Reference example Ref-4 was made without addition of bonding promoter. The laminates were cured for 30 min at 177°C, then cooled to room temperature. The bond strength was evaluated. The results are given in table 5.

**Table 5**

| Ex | Fluoropolymer layer | Silicone layer | Bond strength in kN/m (type of failure) |
|---|---|---|---|
| 17 | FPC-2 + 1.4 phr SIL-1 | Compound B | (RT) |
| 18 | FPC-2 | Compound B + 2 phr SIL-1 | (RT) |
| 19 | FPC-2 + 1.4 phr SIL-1 | Compound B + 2 phr SIL-1 | (RT) |
| Ref-4 | FPC-2 | Compound B | 1.3 (IF) |

| | | | |
|---|---|---|---|
| RT: rubber tear; IF: interfacial separation | | | |

## Claims

1. A method of bonding a first composition comprising a first polymer that first polymer being a fluoropolymer that is curable by a peroxide curing reaction to a second composition comprising a second polymer said second polymer being different from the first polymer, wherein the second polymer is selected from curable fluoropolymers and silicone-containing polymers and wherein the first and second composition are free of a dehydrofluorination agent, said method comprises:
bringing the first composition in contact with the second composition such that a common interface is formed,
curing at least the part of the compositions forming the common interface,
wherein the curing is carried out in presence of a peroxide curing agent and a bonding promoter, wherein the bonding promoter corresponds to the general formula (I)
R₁QSi(R₂)ₓ(R₃)₃₋ₓ (I)
wherein R₁ is
CH₂=CX
or 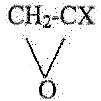
wherein X represents a halogen or a lower alkyl group having 1, 2, 3 or 4 carbon atoms, Q is a chemical bond or an organic linking group, each R₂ independently represents a linear, branched or cyclic alkyl or aryl group, each R₃ represents a halogen or a group OR₄, wherein each R₄ independently represents a linear, branched or cyclic alkyl or aryl group.

2. The method of claim 1 wherein the group Q linking the polymerisable group R1 to the Si-containing moiety is selected from
(a) a chemical bond
(b) a hydrocarbon group containing from 1 to 20 carbon atoms, , which may further contain one or more oxygen, nitrogen, or sulphur atoms or a combination thereof,
(c) a sulfonyl, sulfoxy, sulfonamido, carbonamido, carbonyloxy, urethanylene, ureylene, and oxy group.

3. The method according to any one of the preceding claims wherein the bonding promoter is of the general formula
CH₂=CX-COO-(CH₂)_{g}-Si(R₅)ₓ(R₆)₃₋ₓ (II)
wherein X is H or CH₃, g is 1, 2, 3 or 4, x is 0, 1 or 2, R₅ is an alkyl group, R₆ represents a halogen or a group OR₇, wherein each R₇ independently represents an alkyl group.

4. The method according to any one of claims 1 to 2 wherein the bonding promoter has the general formula
CH₂=CH-Si(R₅)ₓ(R₆)₃₋ₓ (III)
wherein x is 0, 1 or 2, R₅ is an alkyl group, R₆ represents a halogen or a group OR₇, wherein each R₇ independently represents an alkyl group.

5. The method according to any one of claims 1 to 2 wherein the bonding promoter has the general formula 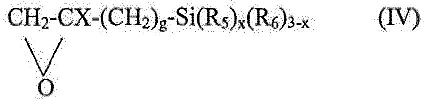 wherein X is H or CH₃, g is 1, 2, 3 or 4, x is 0, 1 or 2, R₅ is an alkyl group, R₆ represents a halogen or a group OR₇, wherein each R₇ independently represents an alkyl group.

6. The method according to any one of the preceding claims, wherein the bonding promoter is contained in the first composition, in the second composition or in both, the first and the second composition.

7. The method according to any one of the preceding claims wherein the bonding promoter is present in the fluoropolymer layer in an amount of from 0.1% to 10% by weight and/or in the second composition in an amount of from 0.1% to 15% by weight, wherein the second polymer is a silicone polymer.

8. The method according to any one of the preceding claims wherein the peroxide curing agent comprises a dialkyl peroxide, a bis(dialkyl)peroxide or a combination thereof.

9. The method according to any one of the preceding claims wherein the first fluoropolymer contains bromine and/or iodine atoms.

10. The use of the composition , comprising a first and a second composition as defined in claim 1 for making articles comprising a first layer in contact with a second layer, wherein the article is a hose, a tube, an O-ring, a valve, a container or a seal.

## Patentansprüche

1. Verfahren zum Binden einer ersten Zusammensetzung, umfassend ein erstes Polymer, wobei das erste Polymer ein Fluorpolymer ist, das durch eine Peroxid-Härtungsreaktion härtbar ist, an eine zweite Zusammensetzung, umfassend ein zweites Polymer, wobei das zweite Polymer sich von dem ersten Polymer unterscheidet, wobei das zweite Polymer ausgewählt ist aus härtbaren Fluorpolymeren und silikonhaltigen Polymeren und wobei die erste und die zweite Zusammensetzung frei von einem Dehydrofluorierungsmittel sind, wobei das Verfahren Folgendes umfasst:
Inkontaktbringen der ersten Zusammensetzung mit der zweiten Zusammensetzung derart, dass eine gemeinsame Grenzfläche gebildet wird,
Härten wenigstens des Teils der Zusammensetzungen, der die gemeinsame Grenzfläche bildet,
wobei das Härten unter Vorhandensein eines Peroxid-Härtungsmittels und eines Bindungspromotors durchgeführt wird, wobei der Bindungspromotor der allgemeinen Formel (I)
R₁QSi(R₂)ₓ(R₃)₃₋ₓ (I)
entspricht, worin R₁
CH₂=CX
oder 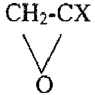 ist, worin X für ein Halogen oder eine niedere Alkylgruppe mit 1, 2, 3 oder 4 Kohlenstoffatomen steht, Q eine chemische Bindung oder eine organische Verbindungsgruppe ist, jedes R₂ unabhängig für eine lineare, verzweigte oder cyclische Alkyl- oder Arylgruppe steht, jedes R₃ für ein Halogen oder eine Gruppe OR₄ steht, wobei jedes R₄ unabhängig für eine lineare, verzweigte oder cyclische Alkyl- oder Arylgruppe steht.

2. Verfahren nach Anspruch 1, wobei die Gruppe Q, welche die polymerisierbare Gruppe R1 mit der Si-haltigen Einheit verbindet, ausgewählt ist aus
(a) einer chemischen Bindung,
(b) einer Kohlenwasserstoffgruppe mit 1 bis 20 Kohlenstoffatomen, die ferner ein oder mehrere Sauerstoff-, Stickstoff- oder Schwefelatome oder eine Kombination davon enthalten kann,
(c) einer Sulfonyl-, Sulfoxy-, Sulfonamido-, Carbonamido-, Carbonyloxy-, Urethanylen-, Ureylen- und Oxygruppe.

3. Verfahren nach einem der vorstehenden Ansprüche, wobei der Bindungspromotor die allgemeine Formel
CH₂=CX-COO-(CH₂)_{g}-Si(R₅)ₓ(R₆)₃₋ₓ (II)
besitzt, worin X H oder CH₃ ist, g 1, 2, 3 oder 4 ist, x 0, 1 oder 2 ist, R₅ eine Alkylgruppe ist, R₆ für ein Halogen oder eine Gruppe OR₇ steht, wobei jedes R₇ unabhängig für eine Alkylgruppe steht.

4. Verfahren nach einem der Ansprüche 1 bis 2, wobei der Bindungspromotor die allgemeine Formel
CH₂=CH-Si(R₅)ₓ(R₆)₃₋ₓ (III)
besitzt, worin x 0, 1 oder 2 ist, R₅ eine Alkylgruppe ist, R₆ für ein Halogen oder eine Gruppe OR₇ steht, wobei jedes R₇ unabhängig für eine Alkylgruppe steht.

5. Verfahren nach einem der Ansprüche 1 bis 2, wobei der Bindungspromotor die allgemeine Formel 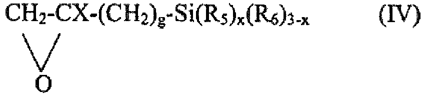 besitzt, worin X H oder CH₃ ist, g 1, 2, 3 oder 4 ist, x 0, 1 oder 2 ist, R₅ eine Alkylgruppe ist, R₆ für ein Halogen oder eine Gruppe OR₇ steht, wobei jedes R₇ unabhängig für eine Alkylgruppe steht.

6. Verfahren nach einem der vorstehenden Ansprüche, wobei der Bindungspromotor in der ersten Zusammensetzung, in der zweiten Zusammensetzung oder in sowohl der ersten als auch der zweiten Zusammensetzung enthalten ist.

7. Verfahren nach einem der vorstehenden Ansprüche, wobei der Bindungspromotor in der Fluorpolymerschicht in einer Menge von 0,1 Gew.-% bis 10 Gew.-% und/oder in der zweiten Zusammensetzung in einer Menge von 0,1 Gew.-% bis 15 Gew.-% vorhanden ist, wobei das zweite Polymer ein Silikonpolymer ist.

8. Verfahren nach einem der vorstehenden Ansprüche, wobei das Peroxid-Härtungsmittel ein Dialkylperoxid, ein Bis(dialkyl)peroxid oder eine Kombination davon umfasst.

9. Verfahren nach einem der vorstehenden Ansprüche, wobei das erste Fluorpolymer Brom- und/oder lodatome enthält.

10. Verwendung der Zusammensetzung, die eine erste und eine zweite Zusammensetzung umfasst, wie in Anspruch 1 definiert, zur Herstellung von Artikeln, die eine erste Schicht umfassen, die in Kontakt mit einer zweiten Schicht ist, wobei der Artikel ein Schlauch, eine Röhre, ein O-Ring, ein Ventil, ein Behälter oder eine Dichtung ist.

## Revendications

1. Procédé de liaison d'une première composition comprenant un premier polymère, ce premier polymère étant un fluoropolymère qui est durcissable par une réaction de durcissement par peroxyde, à une deuxième composition comprenant un deuxième polymère, ledit deuxième polymère étant différent du premier polymère, dans lequel le deuxième polymère est choisi parmi des fluoropolymères durcissables et des polymères contenant de la silicone et dans lequel les première et deuxième compositions sont exemptes d'un agent de déshydrofluoration, ledit procédé comprenant :
la mise en contact de la première composition avec la deuxième composition de telle sorte qu'une interface commune est formée,
le durcissement d'au moins la partie des compositions formant l'interface commune,
dans lequel le durcissement est effectué en présence d'un agent de durcissement peroxyde et d'un promoteur de liaison, dans lequel le promoteur de liaison correspond à la formule générale (I)
R₁QSi(R₂)ₓ(R₃)₃₋ₓ (I)
dans laquelle R₁ est
CH₂=CX
ou 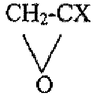 dans laquelle X représente un halogène ou un groupe alkyle inférieur comportant 1, 2, 3 ou 4 atomes de carbone. Q est une liaison chimique ou un groupe de liaison organique, chaque R₂ représente indépendamment un groupe alkyle linéaire, ramifié ou cyclique ou aryle, chaque R₃ représente un halogène ou un groupe OR₄, dans laquelle chaque R₄ représente indépendamment un groupe alkyle linéaire, ramifié ou cyclique ou aryle.

2. Procédé selon la revendication 1, dans lequel le groupe Q reliant le groupe polymérisable R1 au fragment contenant Si est choisi parmi
(a) une liaison chimique
(b) un groupe hydrocarboné contenant de 1 à 20 atomes de carbone, qui peut en outre contenir un ou plusieurs atomes d'oxygène, azote ou soufre ou une combinaison de ceux-ci,
(c) un groupe sulfonyle, sulfoxy, sulfonamido, carbonamido, carbonyloxy, uréthanylene, uréylène et oxy.

3. Procédé selon l'une quelconque des revendications précédentes, dans lequel le promoteur de liaison est de formule générale
CH₂=CX-COO-(CH₂)_{g}-Si(R₅)ₓ(R₆)₃₋ₓ (II)
dans laquelle X est H ou CH₃, g vaut 1, 2, 3 ou 4, x vaut 0, 1 ou 2, R₅ est un groupe alkyle, R₆ représente un halogène ou un groupe OR₇, dans laquelle chaque R₇ représente indépendamment un groupe alkyle.

4. Procédé selon l'une quelconque des revendications 1 à 2, dans lequel le promoteur de liaison est de formule générale
CH₂=CH-Si(R₅)ₓ(R₆)₃₋ₓ (III)
dans laquelle x vaut 0, 1 ou 2, R₅ est un groupe alkyle, R₆ représente un halogène ou un groupe OR₇, dans laquelle chaque R₇ représente indépendamment un groupe alkyle.

5. Procédé selon l'une quelconque des revendications 1 à 2, dans lequel le promoteur de liaison est de formule générale 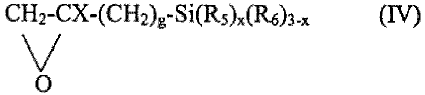 dans laquelle X est H ou CH₃, g vaut 1, 2, 3 ou 4, x vaut 0, 1 ou 2, R₅ est un groupe alkyle, R₆ représente un halogène ou un groupe OR₇, dans laquelle chaque R₇ représente indépendamment un groupe alkyle.

6. Procédé selon l'une quelconque des revendications précédentes, dans lequel le promoteur de liaison est contenu dans la première composition, dans la deuxième composition ou dans l'une et l'autre des première et deuxième compositions.

7. Procédé selon l'une quelconque des revendications précédentes, dans lequel le promoteur de liaison est présent dans la couche de fluoropolymère en une quantité allant de 0,1 % à 10 % en poids et/ou dans la deuxième composition en une quantité de 0,1 % à 15 % en poids, dans lequel le deuxième polymère est un polymère de silicone.

8. Procédé selon l'une quelconque des revendications précédentes, dans lequel l'agent de durcissement peroxyde comprend un peroxyde de dialkyle, un bis(dialkyl)peroxyde ou une combinaison de ceux-ci.

9. Procédé selon l'une quelconque des revendications précédentes, dans lequel le premier fluoropolymère contient des atomes de brome et/ou d'iode.

10. Utilisation de la composition comprenant une première composition et une deuxième composition selon la revendication 1, pour fabriquer des articles comprenant une première couche en contact avec une deuxième couche, dans laquelle l'article est un tuyau souple, un tube, un joint torique, une valve, un récipient ou un joint.
